# EUROPÄISCHE PATENTSCHRIFT

(11) **EP 2 434 670 B1**
(45) Veröffentlichungstag und Bekanntmachung des Hinweises auf die Patenterteilung: **20.01.2016**
(21) Anmeldenummer: 11181363.0
(22) Anmeldetag: 15.09.2011
(51) Int. Cl.: H04B 17/16, H04B 17/17, H04B 7/04

(54) **Analyse von zusammengesetzten Signalen**
Analysis of composite signals
Analyse des signaux composites

(30) Priorität: 27.09.2010 DE 102010046653
(43) Veröffentlichungstag der Anmeldung: 28.03.2012
(73) Patentinhaber: Rohde & Schwarz GmbH & Co. KG, 81671 München (DE)
(72) Erfinder: Krakowski, Claudiu, 85586 Poing (DE); Wolter, Christoph, 80687 München (DE)
(74) Vertreter: Körfer, Thomas

(56) Entgegenhaltungen:
- EP-A1- 1 667 340
- US-A1- 2007 070 691

## Beschreibung

Die Erfindung betrifft eine Vorrichtung und ein Verfahren zur Analyse von zusammengesetzten Signalen, insbesondere von MIMO/MISO-Signalen, eines drahtlosen Kommunikationssystems.

Der Trend hin zu höheren Datenraten bei drahtlosen Kommunikationssystemen hält auch weiterhin ungebrochen an und führt zur Entwicklung von weiteren Kommunikationsstandards, die nicht nur die zeitliche, sondern auch die räumliche Dimension zur Informationsübertragung nutzen. Für den privaten Gebrauch wurde z.B. der WLAN-Standard (engl. wireless local area network; dt. drahtloses lokales Netzwerk) IEEE 802.11n (engl. institute of electrical and electronics engineers; dt. als Standardisierungs-Gremium fungierender Ingenieursverband) eingeführt, der Datenübertragungsraten von bis zu 600 MBit/s zwischen Computersystemen erlaubt. Die stetige Nachfrage nach multimediafähigen Mobiltelefonen machte auch hier die Entwicklung eines neuen Mobilfunkstandards erforderlich, um die immer größer werdenden Inhalte schnell zu Übertragen. Schlussendlich wird sogar versucht abgelegene Siedlungen mittels neuer Kommunikationsstandards mit einer hohen Datenrate an das Internet anzubinden. Hierfür werden die Kommunikationsstandards LTE (engl. Long Term Evolution; dt. Langzeitentwicklung) und WiMAX (engl. worldwide interoperability for microwave access; dt. weltweite Kompatibilität für Mikrowellenzugriffe) eingesetzt, die allesamt OFDM-MIMO (engl. orthogonal frequency division multiplex; dt. orthogonaler Frequenzmultiplex) als Modulationsstandard einsetzten.

Die entsprechenden Kommunikationssysteme, wie z.B. WLAN-Router, Mobiltelefone oder Kommunikationssticks, müssen, um die hohen Datenraten erreichen zu können, in vielerlei Hinsicht auf ihre Funktionsfähigkeit geprüft werden. Die notwendigen Messvorrichtungen weisen bei klassischen Kommunikationssystemen einen Eingangsanschluss auf, der mit der einen Sendeeinheit des zu überprüfenden Kommunikationssystems verbunden ist. Neue WLAN-Router besitzen allerdings mehrere Sendeeinheiten, um die räumliche Dimension zur Informationsübertragung nutzen zu können. Würden nun die Messvorrichtungen ebenfalls eine Vielzahl von Eingangsanschlüssen aufweisen, so müssten auch die notwendigen Verarbeitungsstufen entsprechend dupliziert werden, was zu erhöhten Produktkosten führt. Wird dagegen einzig ein Eingangsanschluss an der Messvorrichtung beibehalten, so kann diese nur nacheinander mit den einzelnen Sendeeinheiten des zu überprüfenden Kommunikationssystems verbunden werden. Die notwendige Zeit für die Überprüfung der drahtlosen Kommunikationssysteme würde allerdings mindestens linear mit der Anzahl der Sendeeinheiten zunehmen.

Aus der US 2007/0070691 A1 ist eine Messvorrichtung bekannt, die die Sendeeinheiten eines MIMO-fähigen Kommunikationssystems überprüft. Die Sendeeinheiten werden über einen Kombinierer zusammengefasst und das gemeinsame Signal wird an einen Eingangsanschluss der Messvorrichtung angelegt. Innerhalb der Messvorrichtung wird der Sendepfad für jede einzelne Sendeeinheit getrennt modelliert. Einer Korrelationseinheit werden das empfangene zusammengesetzte Signal von dem Eingangsanschluss, welches zusätzlich mit einem Fehlervektor überlagert wird, und das Signal einer modellierten Sendeeinheit zugeführt, wobei beide Signale in den Zeitbereich transformiert sind. Ein Ausgangssignal der Korrelationseinheit wird anschließend einer Recheneinheit zugeführt, die einen zusammengesetzten Fehlervektorwert (composite error vector magnitude) berechnet. Arbeitet zumindest eine Sendeeinheit eines zu überprüfenden Kommunikationssystems fehlerhaft, so kann dies anhand des berechneten zusammengesetzten Fehlervektorwerts (Composite EVM) festgestellt werden.

Nachteilig an der US 2007/0070691 A1 ist, dass eine Modellierung der Sendestrecke sehr aufwendig ist und dass oftmals die gesendeten Daten innerhalb einer Testumgebung nicht bekannt sind, sondern einzig sichergestellt ist, dass mit einer festen Periodizität immer die gleichen Daten versendet werden. Außerdem werden in der Messvorrichtung Pilottöne herangezogen um den zusammengesetzten Fehlervektorwert zu berechnen, wodurch dieser wenig aussagekräftig ist, weil die Pilottöne robuster moduliert sind (z.B. QPSK (engl. quadrature phase shift keying; dt. Quadraturphasenumtastung)) und sich meist in der Mitte des Spektrums befinden.

Es ist daher die Aufgabe der Erfindung eine Messvorrichtung und ein entsprechendes Verfahren zu schaffen, wodurch eine sehr genaue und sehr schnelle Analyse der Signale von drahtlosen Kommunikationssystemen erlaubt wird.

Die US 2007/070691 A1 offenbart ein Messgerät und ein dazugehöriges Verfahren, mit dem zumindest zwei OFDM-Transmitter von einem Kommunikationsgerät gleichzeitig mit einem einzigen Eingangsanschluss eines Vektornetzwerkanalysators getestet werden können. Das Dokumente US 2007/0070691 A1 bildet einen "transmit process 1/2" nach. Dieser "transmit process 1/2" ist dem bekannten Kommunikationssystem nachempfunden. Allerdings findet das Nachbilden einzig auf einer mathematischen Ebene statt.

Die EP 1 667 340 A1 beschreibt ein Verfahren zur sicheren Kommunikation, jedoch kein Messgerät, welches dazu geeignet wäre, OFDM-MIMO-Kommunikationssysteme auf ihre Funktionsfähigkeit hin zu überprüfen.

Die Aufgabe wird bezüglich der Messvorrichtung durch die Merkmale des Anspruchs 1 und bezüglich des Verfahrens durch die Merkmale des Anspruchs 8 gelöst. In den Unteransprüchen sind vorteilhafte Weiterbildungen der erfindungsgemäßen Messvorrichtung und des erfindungsgemäßen Verfahrens angegeben.

Die erfindungsgemäße Messvorrichtung zur Analyse von Signalen mit mehreren Datenströmen eines drahtlosen Kommunikationssystems mit zumindest zwei Sendeeinheiten, weist eine Empfangseinheit und eine Verarbeitungseinheit auf. Die zumindest zwei Sendeeinheiten eines bekannten drahtlosen Kommunikationssystems sind nacheinander mit der Messvorrichtung verbindbar. Weiterhin sind zumindest zwei Sendeeinheiten eines zu überprüfenden drahtlosen Kommunikationssystems miteinander und mit der Messvorrichtung verbindbar, wobei ein Datenstrom für jede Sendeeinheit des bekannten und des zu überprüfenden drahtlosen Kommunikationssystems durch die Empfangseinheit empfangbar und in der Verarbeitungseinheit verarbeitbar ist.

Besonders vorteilhaft ist es, dass zuerst ein bekanntes Kommunikationssystem, welches auch als ein funktionsfähiger Referenzprüfling (Golden DUT) angesehen werden kann, vermessen wird und dass mit den gewonnenen Daten anschließend mit geringem Aufwand zu überprüfende Kommunikationssysteme getestet werden können. Die Sendeeinheiten des bekannten drahtlosen Kommunikationssystems werden nacheinander mit der Messvorrichtung verbunden, wobei die Datenströme von der Empfangseinheit empfangen werden und in der Verarbeitungseinheit verarbeitet werden. Auf diese Weise kann der Übertragungskanal ermittelt werden und die gesendeten Symbole demoduliert werden. Die gesendeten Symbole müssen folglich vorher auch nicht bekannt sein.

Wichtig ist nur, dass die gesendeten Symbole des bekannten drahtlosen Kommunikationssystems und des zu überprüfenden drahtlosen Kommunikationssystems dieselben sind, was bei Verwendung der gleichen Chips zur Generierung des digitalen Basisbands sichergestellt ist. Ob der Datenstrom verschlüsselt ist oder nicht spielt in diesem Fall keine Rolle. Weiterhin wird ebenfalls nur ein Eingangsanschluss an der Messvorrichtung benötigt, wodurch die Herstellungskosten niedrig gehalten werden können. Anhand der verarbeitenden Datenströme können die Sendeeinheiten des zu überprüfenden Kommunikationssystems überprüft werden und der zusammengesetzte Fehlervektorwert ermittelt werden.

In einem ersten Verfahrensschritt des erfindungsgemäßen Verfahrens zur Analyse von Signalen mit mehreren Datenströmen eines drahtlosen Kommunikationssystems wird eine erste Sendeeinheit eines bekannten drahtlosen Kommunikationssystems mit einem Eingangsanschluss der Messvorrichtung verbunden. In einem weiteren Verfahrensschritt wird ein Datenstrom mit der ersten Sendeeinheit des bekannten drahtlosen Kommunikationssystems an die Messvorrichtung gesendet. In einem nächsten Verfahrensschritt wird dieser Datenstrom innerhalb der Messvorrichtung aufgezeichnet, wobei die vorangegangenen Schritte für sämtliche Sendeeinheiten des bekannten Kommunikationssystems wiederholt werden, bis in einem darauffolgenden Verfahrensschritt alle Sendeeinheiten eines zu überprüfenden drahtlosen Kommunikationssystems miteinander und mit dem Eingangsanschluss der Messvorrichtung verbunden werden. In einem weiteren Verfahrensschritt werden alle Datenströme des zu überprüfenden drahtlosen Kommunikationssystems mit der Messvorrichtung aufgezeichnet und analysiert.

Es ist besonders vorteilhaft, dass bei dem erfindungsgemäßen Verfahren zuerst ein bekanntes Kommunikationssystem genau analysiert wird, um dadurch später alle Sendeeinheiten eines zu überprüfenden Kommunikationssystems gemeinsam überprüfen zu können, wodurch die Testzeit verkürzt wird. Dadurch, dass das zu überprüfende Kommunikationssystem gegenüber einem bekannten Kommunikationssystem analysiert wird und nicht mit einem Simulationsmodell, sind die Ergebnisse deutlich genauer.

Ein weiterer Vorteil der erfindungsgemäßen Messvorrichtung besteht, wenn es sich bei dem Datenstrom um einen periodischen Datenstrom handelt und/oder wenn der Datenstrom eine Preamble enthält und/oder wenn die Preamblen aller Datenströme orthogonal zueinander sind und/oder wenn der Datenstrom des bekannten drahtlosen Kommunikationssystems der gleiche ist, wie der Datenstrom des zu überprüfenden drahtlosen Kommunikationssystems. Unabhängig von dem Initialisierungswert z.B. des Scramblers (dt. Verwürflers) ist für den Fall, dass wenn es sich bei dem Datenstrom um einen periodischen Datenstrom handelt, sichergestellt, dass der Datenstrom des bekannten Kommunikationssystems und des zu überprüfenden Kommunikationssystems zumindest bei Aufzeichnen einer Periode der Gleiche ist. Für den Fall, dass die Preamblen der Datenströme orthogonal zueinander sind, kann der Übertragungskanal sehr leicht bestimmt werden und für den Fall, dass der Datenstrom des bekannten drahtlosen Kommunikationssystems der gleiche ist, wie der Datenstrom des zu überprüfenden drahtlosen Kommunikationssystems, kann auf sehr einfache Weise der zusammengesetzte Fehlervektorwert bestimmt werden, ohne dass die einzelnen Sendesymbole innerhalb des zu überprüfenden drahtlosen Kommunikationssystems detektiert werden müssen.

Ein weiterer Vorteil des erfindungsgemäßen Verfahrens besteht, wenn der aufgezeichnete Datenstrom oder die aufgezeichneten Sendesymbole von dem bekannten drahtlosen Kommunikationssystem und/oder von dem zu überprüfenden drahtlosen Kommunikationssystem in einer Speichereinheit gespeichert werden. Für den Fall, dass die Sendesymbole von dem bekannten drahtlosen Kommunikationssystem gespeichert werden, kann im weiteren Verlauf eine unbestimmte Anzahl an zu überprüfenden drahtlosen Kommunikationssystemen getestet werden, ohne dass ein bekanntes drahtloses Kommunikationssystem erneut getestet werden muss. Weiterhin besteht die Möglichkeit, dass wenn der Datenstrom für das zu überprüfende drahtlose Kommunikationssystem gespeichert wird, eine statistische Auswertung erfolgen kann, inwieweit sich die Datenströme voneinander unterscheiden, um mögliche Fehlerquellen im Aufbau des zu überprüfenden drahtlosen Kommunikationssystems besser ausfindig machen zu können.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1A: ein schematisches Blockschaltbild eines Ausführungsbeispiels der Messvorrichtung mit einem bekannten drahtlosen Kommunikationssystem;
- Fig. 1B: ein weiteres schematisches Blockschaltbild eines Ausführungsbeispiels der Messvorrichtung mit einem bekannten drahtlosen Kommunikationssystem;
- Fig. 2: ein schematisches Blockschaltbild eines Ausführungsbeispiels der Messvorrichtung mit einem zu überprüfenden drahtlosen Kommunikationssystem; und
- Fig. 3: ein beispielhaftes Ablaufdiagramm für ein Verfahren zur Analyse von Signalen mit mehreren Datenströmen eines drahtlosen Kommunikationssystems mit einer Messvorrichtung.

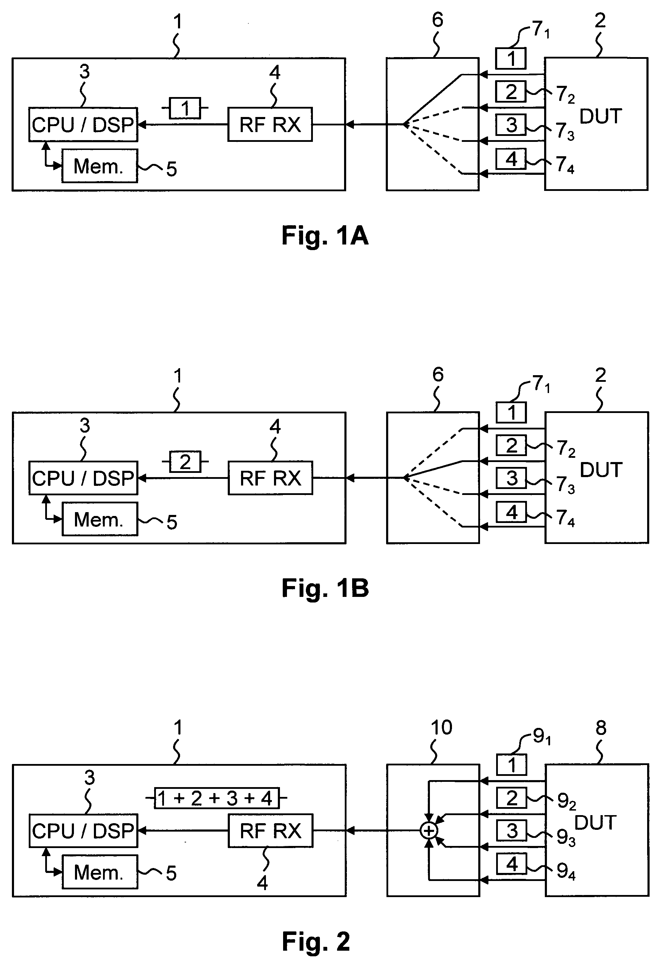

Fig. 1A zeigt ein schematisches Blockschaltbild eines Ausführungsbeispiels der Messvorrichtung 1 mit einem bekannten drahtlosen Kommunikationssystem 2. Die Messvorrichtung 1 weist eine Verarbeitungseinheit 3, eine Empfangseinheit 4 und eine Speichereinheit 5 auf. Bei der Verarbeitungseinheit 3 kann es sich um eine zentrale Verarbeitungseinheit und/oder um einen digitalen Signalprozessor und/oder um einen programmierbaren Logikbaustein (z.B. FPGA (engl. field programmable gate array)) handeln. Die Empfangseinheit 4 beinhaltet sämtliche Komponenten, um ein analoges Hochfrequenzsignal derart zu verarbeiten, dass die Informationen, die in dem analogen Hochfrequenzsignal gespeichert sind, in einem digitalen Datenstrom abgebildet werden können, der an einem Ausgang der Empfangseinheit 4 anliegt. Hierzu ist die Empfangseinheit 4 mit einem Eingangsanschluss der Messvorrichtung 1 verbunden. Der Ausgang der Empfangseinheit 4 ist mit einem Eingang der Verarbeitungseinheit 3 verbunden.

Die Verarbeitungseinheit 3 ist weiterhin mit einer Speichereinheit 5 verbunden (engl. memory). Bei der Speichereinheit 5 kann es sich um einen lokalen Speicher handeln, der innerhalb der Messvorrichtung 1 ausgebildet ist. Bei der Speichereinheit 5 kann es sich aber auch um eine Speichereinheit 5 handeln, die auf einem mit der Messvorrichtung 1 verbundenen Computersystem ausgebildet ist. In diesem Fall, spricht man von der Speichereinheit 5 auch von einem Netzwerkspeicher. Auf einen solchen Netzwerkspeicher können mehrere Messvorrichtungen 1 gleichzeitig zugreifen. Die Messvorrichtung 1 ist in diesem Fall bevorzugt über eine LAN-Schnittstelle (engl. local area network; dt. lokales Netzwerk) mit der Speichereinheit 5 verbunden.

In Fig. 1A ist weiterhin das bekannte drahtlose Kommunikationssystem 2 dargestellt. Das bekannte drahtlose Kommunikationssystem 2 weist zumindest zwei Sendeeinheiten auf. In dem erfindungsgemäßen Ausführungsbeispiel aus Fig. 1A umfasst das bekannte drahtlose Kommunikationssystem 2 vier Sendeeinheiten. Alle Sendeeinheiten des bekannten drahtlosen Kommunikationssystems 2 sind mit dem Eingang einer Schalteinheit 6 verbunden. Über die Schalteinheit 6 sind alle Sendeeinheiten des bekannten drahtlosen Kommunikationssystems 2 nacheinander mit dem Eingangsanschluss der Messvorrichtung 1 verbindbar. Bei dem bekannten drahtlosen Kommunikationssystem 2 handelt es sich z.B. um einen WLAN-Router, ein Mobiltelefon oder einen Kommunikationsstick. Die Kommunikation des bekannten drahtlosen Kommunikationssystems 2 erfolgt dabei über die Kommunikationsstandards WLAN (IEEE 802.11n) und/oder LTE und/oder WiMAX.

Bei den genannten Kommunikationsstandards wird eine hohe Datenübertragungsrate dadurch erreicht, dass ein Datenstrom auf zumindest zwei Sendeeinheiten aufgeteilt wird, wobei neben der zeitlichen auch die räumliche Dimension zur Informationsübertragung genutzt wird. Die mit den Sendeeinheiten verbunden Antennen müssen hierzu allerdings räumlich getrennt sein und einen Mindestabstand zueinander aufweisen. Für die genannten Kommunikationsstandards wird eine OFDM-Modulation als Basismodulation verwendet. Die Einzelträger dieser OFDM-Modulation können je nach Qualität der Verbindung mittels BPSK (engl. binary phase shift keying; dt. binäre Phasenumtastung), QPSK (engl. quadrature phase-shift keying; dt. Quadraturphasenumtastung) oder QAM (engl. quadrature amplitude modulation; dt. Quadraturamplitudenmodulation) moduliert werden. In Fig. 1A ist ein Datenstrom in vier Teildatenströme 7₁, 7₂, 7₃, 7₄ aufgeteilt. Die Schalteinheit 6 verbindet die einzelnen Sendeeinheiten des bekannten drahtlosen Kommunikationssystems 2 nacheinander mit der Empfangseinheit 4 der Messvorrichtung 1. In Fig. 1A ist die Sendeeinheit 1 des bekannten drahtlosen Kommunikationssystems 2 mit der Empfangseinheit 4 verbunden. Der Datenstrom 7₁ kann von der Empfangseinheit 4 empfangen werden. Die Empfangseinheit 4 empfängt den Datenstrom 7₁ und mischt diesen in das Basisband herunter. Anschließend wird der Datenstrom 7₁ bevorzugt in der Speichereinheit 5 gespeichert. Sobald der Datenstrom 7₁ in der Speichereinheit 5 gespeichert ist, verbindet die Schalteinheit 6 die zweite Sendeeinheit des bekannten drahtlosen Kommunikationssystems 2 mit der Empfangseinheit 4 der Messvorrichtung 1.

Im Folgengen wird der Datenstrom 7₂ der Empfangseinheit 4 der Messvorrichtung 1 zugeführt. Dieser Sachverhalt ist in Fig. 1B dargestellt. Der Datenstrom 7₂ wird ebenfalls in der Speichereinheit 5 gespeichert. Anschließend verbindet die Schalteinheit 6 die dritte Sendeeinheit des bekannten drahtlosen Kommunikationssystems 2 mit der Empfangseinheit 4 der Messvorrichtung 1 und der Datenstrom 7₃ wird nun in der Speichereinheit 5 gespeichert. Schlussendlich verbindet die Schalteinheit 6 die vierte Sendeeinheit des bekannten drahtlosen Kommunikationssystems 2 mit der Empfangseinheit 4 der Messvorrichtung 1 und der Datenstrom 7₄ wird in der Speichereinheit 5 gespeichert. Das bekannte drahtlose Kommunikationssystem 2 kann auch mehr als vier Sendeeinheiten aufweisen, wobei der beispielhaft herausgegriffene Kommunikationsstandard IEEE 802.11n maximal vier Sendeeinheiten unterstützt. Nachdem alle Datenströme 7₁ bis 7₄ in der Speichereinheit 5 gespeichert sind, kann die Verarbeitungseinheit 3 den Übertragungskanal bestimmen. Dies gelingt, weil jeder Datenstrom 7₁ bis 7₄ eine Präambel enthält, wobei die Präambeln aller Datenströme 7₁ bis 7₄ orthogonal zueinander aufgebaut sind.

Bei den Datenströmen 7₁ bis 7₄ handelt es sich ebenfalls um periodische Datenströme 7₁ bis 7₄, die sich mit einer festen Periodizität wiederholen. Der periodische Aufbau der Datenströme 7₁ bis 7₄ ermöglicht die sequentielle Abtastung der Datenströme 7₁ bis 7₄ durch die Schalteinheit 6. Nachdem der Übertragungskanal unter Zuhilfenahme der orthogonal aufgebauten Präambeln innerhalb der Datenströme 7₁ bis 7₄ bestimmt ist, können die Sendesymbole aus den Datenströmen 7₁ bis 7₄ durch die Verarbeitungseinheit 3 der Messvorrichtung 1 ermittelt werden. Bei den Sendesymbolen handelt es sich um die I-und Q-Komponente (In-Phasen und Quadraturkomponente).

Die einzelnen Datenströme 7₁ bis 7₄ können auch sofort, nachdem sie von der Messvorrichtung 1 empfangen worden sind, in ihre I- und Q-Komponente zerlegt werden. Dies gelingt allerdings nur dann, wenn jeweils nur ein Space-Time-Stream (dt. Raumzeitstrahl) auf einer Sendeeinheit übertragen wird. Dies wird durch das Spatial-Mapping (dt. räumliche Zuordnung) festgelegt und durch eine Q-Matrix beschrieben. Handelt es sich bei der Q-Matrix um eine diagonale Matrix, so wird einem Space-Time-Stream genau eine Sendeeinheit zugewiesen. Die Q-Matrix kann allerdings auch nicht diagonal aufgebaut sein, um z.B. ein Beam-Forming (dt. Strahlenbündelung) des Signals zu ermöglichen. Dieser Sachverhalt ist, wie auch der gesamte Kommunikationsstandard, ausführlich in der Norm des Kommunikationsstandards IEEE 802.11n erläutert.

Bei dem bekannten drahtlosen Kommunikationssystem 2 handelt es sich um ein Kommunikationssystem 2, bei dem sichergestellt ist, dass alle Sendeeinheiten und sonstigen Baugruppen voll funktionsfähig sind. Für jede einzelne Konfiguration des bekannten drahtlosen Kommunikationssystems 2 werden die Datenströme 7₁ bis 7₄ entsprechend den Zeichnungsfiguren 1A und 1B in der Messvorrichtung 1 aufgezeichnet. Eine Konfiguration beschreibt dabei z.B. die Anzahl der gesendeten Datenströme und/oder die verwendeten Modulations- und/oder Codierschemata und/oder die Länge der Datenströme und/oder die Periodizität der Datenströme. Für den WLAN-Kommunikationsstandard IEEE 802.11n beschreiben z.B. die verschiedenen MCS (engl. modulation coding scheme; dt. Modulationscodierschemata) die einzelnen Konfigurationen. Für einen MCS-Index von 70, ist der erste Spartial Stream, bzw. Space Time Stream mit 64-QAM, der zweite Stream mit 16-QAM, der dritte Stream mit 16-QAM und der vierte Stream mit QPSK moduliert.

Mit einer Codingrate (dt. Codierrate) von 3/4 und einem Guard-Intervall (dt. Schutzintervall) von 400 ns kann eine Bruttodatenrate von 360 Mbit/s erzielt werden. Aufgrund der Tatsache, dass der WLAN-Kommunikationsstandard IEEE 802.11n 76 verschiedene MCS-Indexe vorsieht, werden die Datenströme bevorzugt sequentiell erfasst und anschließend verarbeitet. Die Datenströme 7₁ bis 7₄ werden innerhalb des bekannten Kommunikationssystems 2 durch einen Baustein für die Generierung des digitalen Basisbandes erzeugt. Ein solcher Baustein besitzt für gewöhnlich eine Testfunktion, die zur Ausgabe eines periodischen Datenstroms führt. Ein besonderer Vorteil dabei ist, dass keine separate Datenquelle notwendig ist.

Nachdem die Datenströme 7₁ bis 7₄ und die dazugehörigen Sendesymbole des bekannten drahtlosen Kommunikationssystems 2 innerhalb der Messvorrichtung 1 für sämtliche Konfigurationen ermittelt sind, können im Anschluss daran zu überprüfende drahtlose Kommunikationssysteme 8 mit der Messvorrichtung 1 verbunden werden. Hierzu ist in Fig. 2 ein schematisches Blockschaltbild eines Ausführungsbeispiels der Messvorrichtung 1 mit einem zu überprüfenden drahtlosen Kommunikationssystem 8 dargestellt. Bei dem zu überprüfenden drahtlosen Kommunikationssystem 8 handelt es sich um ein zu dem bekannten drahtlosen Kommunikationssystem 2 identisches Kommunikationssystem mit Ausnahme, dass die Funktionsfähigkeit des zu überprüfenden drahtlosen Kommunikationssystems 8 noch nicht überprüft ist. Die Sendeeinheiten des zu überprüfenden drahtlosen Kommunikationssystems 8 sind über einen Kombinator miteinander und über einen Ausgang des Kombinators mit einem Eingangsanschluss der Messvorrichtung und damit mit der Empfangseinheit 4 der Messvorrichtung 1 verbindbar. Der Kombinator 10 addiert sämtliche Eingangssignale zu einem Ausgangssignal. Dabei werden die Leistungen der Eingangssignale zu gleichen Teilen miteinander addiert. Die Datenströme 9₁ bis 9₄ werden über jede Sendeeinheit des zu überprüfenden drahtlosen Kommunikationssystems 8 übertragen und innerhalb des Kombinators 10 addiert und der Messvorrichtung 1 an einen Eingangsanschluss zugeführt.

An der Empfangseinheit 4 der Messvorrichtung 1 liegt ein Summensignal aus den einzelnen Datenströmen 9₁ bis 9₄ des zu überprüfenden Kommunikationssystems 8 an. Die von dem zu überprüfenden drahtlosen Kommunikationssystem 8 generierten Datenströme 9₁ bis 9₄ sind identisch zu den Datenströmen 7₁ bis 7₄, die durch das bekannte drahtlose Kommunikationssystem 2 generiert wurden. Einzig der Initialisierungswert des Scramblers kann unterschiedlich sein, so dass die Reihenfolge der einzelnen Datensymbole innerhalb der Datenströme 9₁ bis 9₄ und 7₁ bis 7₄ nicht miteinander übereinstimmen. Dadurch, dass allerdings auch die Datenströme 9₁ bis 9₄ periodisch aufgebaut sind, kann einem zufälligen Initialisierungswert des Scramblers begegnet werden. Die von der Empfangseinheit 4 der Messvorrichtung 1 empfangenen Datenströme 9₁ bis 9₄ werden in der Speichereinheit 5 der Messvorrichtung 1 gespeichert.

Die Präambeln der Datenströme 9₁ bis 9₄ des zu überprüfenden drahtlosen Kommunikationssystems 8 sind ebenfalls orthogonal zueinander aufgebaut. Sobald eine Periode der Datenströme 9₁ bis 9₄ vollständig in der Speichereinheit 5 der Messvorrichtung 1 gespeichert ist, kann die Verarbeitungseinheit 3 den Übertragungskanal bestimmen. Hierzu macht sich die Verarbeitunseinheit 3 der Messvorrichtung 1 ebenfalls wieder die Orthogonalität der Präambeln zunutze. Sobald der Übertragungskanal durch die Verarbeitungseinheit 3 innerhalb der Messvorrichtung 1 bestimmt ist, werden die demodulierten Sendesymbole der Datenströme 7₁ bis 7₄ des bekannten drahtlosen Kommunikationssystems 2 mit dem berechneten Übertragungskanal multipliziert. Anschließend kann der zusammengesetzte Fehlervektorwert des zu überprüfenden drahtlosen Kommunikationssystems 8 berechnet werden.

Allerdings kann für das zu überprüfende drahtlose Kommunikationssystem 8 kein Fehlervektorwert für jedes einzelne empfangene Sendesymbol innerhalb der Datenströme 9₁ bis 9₄ berechnet werden, weil keine mehrfachen Empfangspfade zur Verfügung stehen. Dies könnte nur dadurch gelingen, indem die einzelnen periodischen Datenströme 9₁ bis 9₄ gemäß den Fig. 1A und 1B sequentiell durch die Schalteinheit 6 mit der Empfangseinheit 4 der Messvorrichtung 1 verbunden werden würden, oder wenn jeweils eine Empfangseinheit innerhalb der Messvorrichtung 1 für jeden Datenstrom 9₁ bis 9₄ vorhanden wäre. Allerdings ist dies nicht unbedingt notwendig, denn wenn z.B. der Verstärker für eine Sendeeinheit des zu überprüfenden drahtlosen Kommunikationssystems 8 fehlerhaft arbeitet, dann schlägt sich dies in den zusammengesetzten Fehlervektorwert nieder. Zwar kann der fehlerhafte Verstärkerbaustein nicht genau ausfindig gemacht werden, jedoch ist dies im Zuge eines Produktionstests auch nicht notwendig. Das zu überprüfende drahtlose Kommunikationssystem 8 wird aus dem Produktionszyklus entfernt und kann gegebenenfalls in einem separaten Prozess genauer untersucht werden. Besonders vorteilhaft ist, dass die Testdaten, die den einzelnen Datenströmen 7₁ bis 7₄ des bekannten drahtlosen Kommunikationssystems 2 zugewiesen werden, nicht bekannt sein müssen, sondern einzig sichergestellt sein muss, dass das bekannte drahtlose Kommunikationssystem 2 in seiner Funktionsfähigkeit nicht beeinträchtigt ist. Die Testdaten können innerhalb des bekannten drahtlosen Kommunikationssystems 2 beliebig verschlüsselt und mit Prüfsummen versehen werden, weil sich der zusammengesetzte Fehlervektorwert einzig zwischen den empfangenen Datenströmen 7₁ bis 7₄ des bekannten drahtlosen Kommunikationssystems 2 und den empfangenen Datenströmen 9₁ bis 9₄ des zu überprüfenden drahtlosen Kommunikationssystems 8 berechnet.

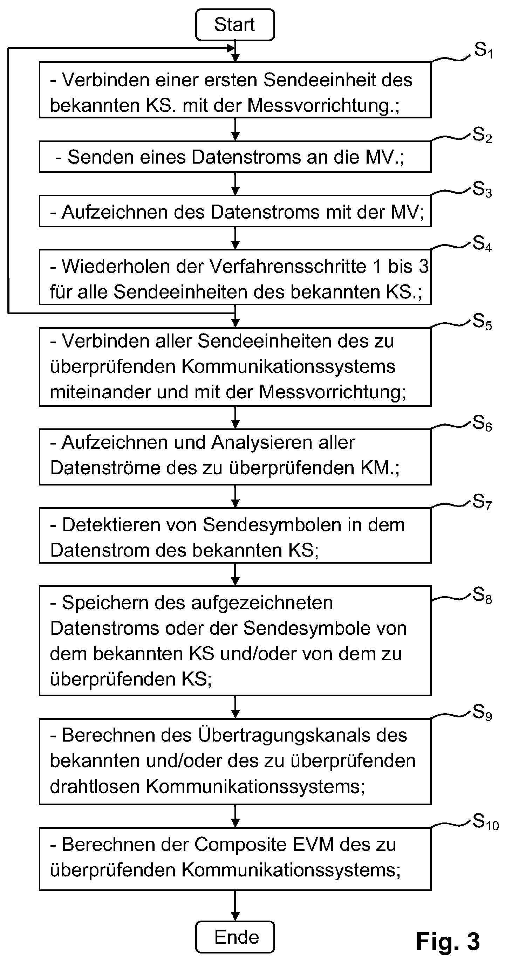

In Fig. 3 ist ein beispielhaftes Ablaufdiagramm für ein Verfahren zur Analyse von Signalen mit mehreren Datenströmen eines drahtlosen Kommunikationssystems mit einer Messvorrichtung 1 dargestellt. In einem ersten Verfahrensschritt S₁ wird eine Sendeeinheit eines bekannten drahtlosen Kommunikationssystems 2 mit einem Eingangsanschluss der Messvorrichtung 1 verbunden. Wie in den Zeichnungsfiguren 1A und 1B dargestellt, weist das bekannte drahtlose Kommunikationssystem 2 mehrere Sendeeinheiten auf, die über die Schalteinheit 6 nacheinander mit der Empfangseinheit 4 der Messvorrichtung 1 verbunden werden.

In einem zweiten Verfahrensschritt S₂ wird ein Datenstrom 7₁ mit der ersten Sendeeinheit des bekannten drahtlosen Kommunikationssystems 2 an die Messvorrichtung 1 gesendet. Bei dem Datenstrom 7₁ handelt es sich z.B. zumindest um einen Space Time Stream (Raum Zeit Strom) der mittels eines Spacial Mappers (räumlicher Zuordner) auf eine Sendeeinheit abgebildet wird.

In einem dritten Verfahrensschritt S₃ wird der Datenstrom 7₁ der ersten Sendeeinheit des bekannten drahtlosen Kommunikationssystems 2 durch die Messvorrichtung 1 aufgezeichnet. Dies gelingt durch die Empfangseinheit 4 und die Verarbeitungseinheit 3, die den Datenstrom 7₁ verarbeiten und bevorzugt in der Speichereinheit 5 der Messvorrichtung 1 speichern.

In einem vierten Verfahrensschritt S₄ werden die Verfahrensschritte S₁ bis S₃ für alle Sendeeinheiten des bekannten drahtlosen Kommunikationssystems 2 wiederholt. Hierzu verbindet bevorzugt die Schalteinheit 6 die einzelnen Sendeeinheiten des bekannten drahtlosen Kommunikationssystems 2 abwechselnd mit der Empfangseinheit 4 der Messvorrichtung 1. Der Verfahrensschritt S₄ wird für jede Konfiguration wiederholt. Eine Konfiguration beinhaltet dabei z.B. die Anzahl der gesendeten Datenströme und/oder die verwendeten Modulations- und/oder Codierschemata und/oder die Länge der Datenströme und/oder die Periodizität der Datenströme. In einem fünften Verfahrensschritt S₅ werden alle Sendeeinheiten eines zu überprüfenden drahtlosen Kommunikationssystems 8 miteinander und mit einem Eingangsanschluss der Messvorrichtung 1 verbunden. Die einzelnen Sendeeinheiten des zu überprüfenden drahtlosen Kommunikationssystems 8 werden dazu einem Kombinator 10 zugeführt, der die von den Sendeeinheiten kommenden Signale zu gleichen Teilen addiert. Der Ausgang des Kombinators (10) ist innerhalb der Messvorrichtung 1 mit der Empfangseinheit 4 verbunden.

In einem sechsten Verfahrensschritt S₆ werden alle Datenströme 9₁ bis 9₄ des zu überprüfenden drahtlosen Kommunikationssystems 8 innerhalb der Messvorrichtung 1 aufgezeichnet und analysiert. Unter Analysieren ist zu verstehen, dass der Übertragungskanal des zu überprüfenden drahtlosen Kommunikationssystems 8 anhand der orthogonalen Präambeln der Datenströme 9₁ bis 9₄ berechnet wird. Der berechnete Übertragungskanal wird anschließend im Zuge der Analyse dazu verwendet, um mit dem Datenstrom 7₁ bis 7₄ des bekannten drahtlosen Kommunikationssystems 2 einen möglichen Fehler innerhalb des Datenstroms 9₁ bis 9₄ des zu überprüfenden Kommunikationssystems 8 feststellen zu können.

In einem siebten Verfahrensschritt S₇, welcher sich auch direkt nach dem vierten Verfahrensschritt S₄ anschließen kann, werden die einzelnen Sendesymbole innerhalb jedes Datenstroms 7₁ bis 7₄ des bekannten drahtlosen Kommunikationssystems 2 mit der Messvorrichtung 1 detektiert. Bei den Sendesymbolen handelt es sich um BPSK-und/oder QPSK- und oder QUAM-Symbole, die auf die Einzelträger der OFDM-Modulation moduliert werden. Bei diesen Sendesymbolen wird die I- und Q-Komponente erfasst.

In einem achten Verfahrensschritt S₈ wird der aufgezeichnete Datenstrom 7₁ bis 7₄ oder die detektierten Sendesymbole von dem bekannten drahtlosen Kommunikationssystem 2 durch die Verarbeitungseinheit 3 in einer Speichereinheit 5 der Messvorrichtung 1 gespeichert. Es kann ebenfalls der aufgezeichnete Datenstrom 9₁ bis 9₄ des zu überprüfenden drahtlosen Kommunikationssystems 8 in der Speichereinheit 5 z.B. für eine spätere statische Auswertung gespeichert werden.

In einem neunten Verfahrensschritt S₉ wird der Übertragungskanal des bekannten drahtlosen Kommunikationssystems 2 und/oder des zu überprüfenden drahtlosen Kommunikationssystems 8 berechnet. Dies geschieht durch die Verwendung von orthogonalen Präambeln innerhalb der Datenströme 7₁ bis 7₄ und den Datenströmen 9₁ bis 9₄. Der Verfahrensschritt S₉ zur Berechnung des Übertragungskanals für das bekannte drahtlose Kommunikationssystem 2 kann auch gleich nach dem Verfahrensschritt S₄ ausgeführt werden.

In einem zehnten Verfahrensschritt S₁₀ wird der zusammengesetzte Fehlervektorwert (engl. Composite EVM) des zu überprüfenden drahtlosen Kommunikationssystems 8 durch die Verarbeitungseinheit 3 innerhalb der Messvorrichtung 1 berechnet. Hierzu multipliziert die Verarbeitungseinheit 3 die detektierten Sendesymbole des bekannten drahtlosen Kommunikationssystems 2 mit dem berechneten Übertragungskanal des zu überprüfenden drahtlosen Kommunikationssystems 8 und vergleicht anschließend die ermittelten Sendesymbole mit der Vielzahl an gleichzeitig gemessenen Sendesymbolen des zu überprüfenden drahtlosen Kommunikationssystems 8. Für den Fall, dass der zusammengesetzte Fehlervektorwert des zu überprüfenden drahtlosen Kommunikationssystems 8 einen Schwellwert nicht überschreitet, gilt das zu überprüfende drahtlose Kommunikationssystem 8 als funktionsfähig.

In einem weiteren, nicht dargestellten, Verfahrensschritt können weitere drahtlose Kommunikationssysteme, die zu dem drahtlosen Kommunikationssystem 8 identisch sind, auf ihre Funktionsfähigkeit überprüft werden, wobei die Überprüfung mit dem Verfahrensschritt S₅ beginnt. Die Verfahrensschritte S₁ bis S₁₀ werden für jede zu überprüfende Konfiguration des zu überprüfenden drahtlosen Kommunikationssystems 8 wiederholt. Dabei werden die Verfahrensschritt S₁ bis S₄ nur einmalig für jede Konfiguration ausgeführt. Bei den Datenströmen 7₁ bis 7₄ und 9₁ bis 9₄ des bekannten drahtlosen Kommunikationssystems 2 und des zu überprüfenden drahtlosen Kommunikationssystems 8 handelt es sich um periodische Datenströme 7₁ bis 7₄ und 9₁ bis 9₄, deren Präambeln bevorzugt orthogonal zueinander aufgebaut sind. Innerhalb einer Periode sind die Datenströme 7₁ bis 7₄ identisch mit den Datenströmen 9₁ bis 9₄. Die Messvorrichtung 1 zeichnet dabei bevorzugt eine Periode des Datenstroms 7₁ bis 7₄ und 9₁ bis 9₄ auf.

Bei dem zu überprüfenden drahtlosen Kommunikationssystem 8 handelt es sich bevorzugt um ein MIMO- oder MISO-fähiges Kommunikationssystem, das dem WLAN-Standard IEEE 802.11n oder dem WiMAX-Standard und/oder den LTE-Standard entspricht. Das zu überprüfende drahtlose Kommunikationssystem 8 kann dabei zwei Sendeeinheiten bis hin zu n Sendeeinheiten enthalten, wobei n ganzzahlig und größer gleich 2 ist.

Bei allen Verbindungen handelt es sich bevorzugt um elektrische Verbindungen. Auch die Verbindung zwischen den drahtlosen Kommunikationssystemen 2, 8 und der Messvorrichtung 1 wird durch eine Kabelverbindung realisiert.

Im Rahmen der Erfindung sind alle beschriebenen und/oder bezeichneten Merkmale beliebig miteinander kombinierbar.

## Patentansprüche

1. Messvorrichtung (1) zur Analyse von Signalen mit mehreren Datenströmen (7₁ bis 7ₙ; 9₁ bis 9ₙ) eines drahtlosen Kommunikationssystems (2; 8) mit zumindest zwei Sendeeinheiten, aufweisend eine Empfangseinheit (4) und eine Verarbeitungseinheit (3),
wobei eine Schalteinheit (6) die zumindest zwei Sendeeinheiten eines bekannten drahtlosen Kommunikationssystems (2) zunächst nacheinander einzeln mit der Messvorrichtung (1) verbindet,
wobei dann ein Kombinator (10) die zumindest zwei Sendeeinheiten eines zu überprüfenden drahtlosen Kommunikationssystems (8) miteinander und mit der Messvorrichtung (1) verbindet,
wobei es sich bei dem Datenstrom (7₁ bis 7ₙ; 9₁ bis 9ₙ) um einen periodischen Datenstrom (7₁ bis 7ₙ; 9₁ bis 9ₙ) handelt,
wobei der Datenstrom (7₁ bis 7ₙ; 9₁ bis 9ₙ) eine Preamble enthält,
wobei die Preamblen aller Datenströme (7₁ bis 7ₙ; 9₁ bis 9ₙ) orthogonal zueinander sind und
wobei der Datenstrom (7₁ bis 7ₙ) des bekannten drahtlosen Kommunikationssystems (2) der gleiche ist, wie der Datenstrom (9₁ bis 9ₙ) des zu überprüfenden drahtlosen Kommunikationssystems (8).

2. Messvorrichtung nach Anspruch 1,
**dadurch gekennzeichnet,**
**dass** ein Datenstrom (7₁ bis 7ₙ; 9₁ bis 9ₙ) für jede Sendeeinheit des bekannten und des zu überprüfenden drahtlosen Kommunikationssystems (2; 8) durch die Empfangseinheit (4) empfangbar und in der Verarbeitungseinheit (3) verarbeitbar ist,
und **dass** die zumindest zwei Sendeeinheiten des bekannten drahtlosen Kommunikationssystems (2) über die Schalteinheit (6) nacheinander mit einem Eingangsanschluss der Messvorrichtung (1) verbindbar sind.

3. Messvorrichtung nach Anspruch 1 oder 2,
**dadurch gekennzeichnet,**
**dass** die zumindest zwei Sendeeinheiten des zu überprüfenden drahtlosen Kommunikationssystems (8) über einen Kombinator (10) miteinander und über einen Ausgang des Kombinators (10) mit einem Eingangsanschluss der Messvorrichtung (1) verbindbar sind.

4. Messvorrichtung nach einem der vorherigen Ansprüche,
**dadurch gekennzeichnet,**
**dass** Sendesymbole aus dem empfangenen Datenstrom (7₁ bis 7ₙ) des bekannten drahtlosen Kommunikationssystems (2) in der Verarbeitungseinheit (3) ermittelbar sind.

5. Messvorrichtung nach einem der vorherigen Ansprüche,
**dadurch gekennzeichnet,**
**dass** über jede Sendeeinheit des zu überprüfenden drahtlosen Kommunikationssystems (8) ein Datenstrom (9₁ bis 9ₙ) übertragen wird und dass die Datenströme (9₁ bis 9ₙ) addiert werden und der Messvorrichtung (1) an einem Eingangsanschluss zuführbar sind.

6. Messvorrichtung nach den Ansprüchen 4 und 5,
**dadurch gekennzeichnet,**
**dass** mit den ermittelnden Sendesymbolen und/oder Datenströmen (7₁ bis 7ₙ) des bekannten drahtlosen Kommunikationssystems (2) und den Datenströmen (9₁ bis 9ₙ) des zu überprüfenden drahtlosen Kommunikationssystems (8) die zusammengesetzte Fehler-Vektor-Größe "Composite EVM" des zu überprüfenden drahtlosen Kommunikationssystems (8) durch die Verarbeitungseinheit (3) ermittelbar ist.

7. Messvorrichtung nach einem der vorherigen Ansprüche,
**dadurch gekennzeichnet,**
**dass** die Messvorrichtung (1) die zusammengesetzte Fehler-Vektor-Größe "Composite EVM" für das zu überprüfende drahtlose Kommunikationssystem (8) misst, wobei es sich bei dem zu überprüfenden drahtlosen Kommunikationssystem (8) um ein MIMO- oder MISO-fähiges Kommunikationssystem (8) handelt und dass das zu überprüfende drahtlose Kommunikationssystem (8) dem WLAN-Standard und/oder dem WiMAX-Standard und/oder dem LTE-Standard entspricht.

8. Verfahren zur Analyse von Signalen mit mehreren Datenströmen (7₁ bis 7ₙ; 9₁ bis 9ₙ) eines drahtlosen Kommunikationssystems (2; 8) mit einer Messvorrichtung (1), wobei das drahtlose Kommunikationssystem (2; 8) zumindest zwei Sendeeinheiten aufweist mit den folgenden Verfahrensschritten:
a) Verbinden (S₁) einer einzigen Sendeeinheit eines bekannten drahtlosen Kommunikationssystems (2) mit einem Eingangsanschluss der Messvorrichtung (1);
b) Senden (S₂) eines Datenstroms (7₁ bis 7ₙ) mit dieser einzigen Sendeeinheit des bekannten drahtlosen Kommunikationssystems (2) an die Messvorrichtung (1);
c) Aufzeichnen (S₃) des Datenstroms (7₁ bis 7ₙ) des bekannten drahtlosen Kommunikationssystems (2) mit der Messvorrichtung (1);
d) Wiederholen (S₄) der Verfahrensschritte a) bis c) für alle Sendeeinheiten des bekannten drahtlosen Kommunikationssystems (2) nacheinander;
e) Verbinden (S₅) aller Sendeeinheiten eines zu überprüfenden drahtlosen Kommunikationssystems (8) miteinander und mit dem Eingangsanschluss der Messvorrichtung (1);
f) Aufzeichnen (S₆) und Analysieren aller Datenströme (9₁ bis 9ₙ) des zu überprüfenden drahtlosen Kommunikationssystems (8) mit der Messvorrichtung (1),
wobei es sich bei jedem Datenstrom (7₁ bis 7ₙ; 9₁ bis 9ₙ) um einen periodischen Datenstrom (7₁ bis 7ₙ; 9₁ bis 9ₙ) handelt,
wobei der Datenstrom (7₁ bis 7ₙ; 9₁ bis 9ₙ) eine Preamble enthält,
wobei die Preamblen aller Datenströme (7₁ bis 7ₙ; 9₁ bis 9ₙ) orthogonal zueinander sind und
wobei der Datenstrom (7₁ bis 7ₙ) des bekannten drahtlosen Kommunikationssystems (2) der gleiche ist, wie der Datenstrom (9₁ bis 9ₙ) des zu überprüfenden drahtlosen Kommunikationssystems (8).

9. Verfahren nach Anspruch 8,
**gekennzeichnet durch**
den folgenden Verfahrensschritt:
g) Detektieren (S₇) von einzelnen Sendesymbolen innerhalb jedes Datenstroms (7₁ bis 7ₙ) des bekannten drahtlosen Kommunikationssystems (2) **durch** die Messvorrichtung (1).

10. Verfahren nach Anspruch 8 oder 9,
**gekennzeichnet durch**
den folgenden Verfahrensschritt:
h) Speichern (S₈) des aufgezeichneten Datenstroms (7₁ bis 7ₙ; 9₁ bis 9ₙ) oder der Sendesymbole von dem bekannten drahtlosen Kommunikationssystem (2) und/oder von dem zu überprüfenden drahtlosen Kommunikationssystem (8) in einer Speichereinheit (5).

11. Verfahren nach einem der Ansprüche 8 bis 10,
**gekennzeichnet durch**
den folgenden Verfahrensschritt:
i) Berechnen (S₉) der Übertragungsfunktion des Übertragungskanals des bekannten drahtlosen Kommunikationssystems (2) und/oder des zu überprüfenden drahtlosen Kommunikationssystems (8).

12. Verfahren nach einem der Ansprüche 8 bis 11,
**gekennzeichnet durch**
den folgenden Verfahrensschritt:
j) Berechnen (S₁₀) der zusammengesetzten Fehler-Vektor-Größe "Composite EVM" des zu überprüfenden drahtlosen Kommunikationssystems (8).

13. Verfahren nach einem der Ansprüche 8 bis 12
**dadurch gekennzeichnet,**
**dass** die Verfahrensschritte a) bis e) für jede zu überprüfende Konfiguration des bekannten drahtlosen Kommunikationssystems (2) wiederholt wird,
wobei eine Konfiguration z.B. eine Anzahl der gesendeten Datenströme (7₁ bis 7ₙ; 9₁ bis 9ₙ) und/oder die verwendeten Modulations- und/oder Kodierschemata und/oder eine Länge der Datenströme (7₁ bis 7ₙ; 9₁ bis 9ₙ) und/oder eine Periodizität der Datenströme (7₁ bis 7ₙ; 9₁ bis 9ₙ) beschreibt.

14. Verfahren nach einem der Ansprüche 8 bis 13,
**dadurch gekennzeichnet,**
**dass** bevorzugt eine Periode des Datenstroms (7₁ bis 7ₙ; 9₁ bis 9ₙ) aufgezeichnet wird.

15. Verfahren nach einem der Ansprüche 8 bis 14,
**dadurch gekennzeichnet,**
**dass** die Messvorrichtung (1) die zusammengesetzte Fehler-Vektor-Größe "Composite EVM" für das zu überprüfende drahtlose Kommunikationssystem (8) misst, wobei es sich bei dem zu überprüfenden drahtlosen Kommunikationssystem (8) um ein MIMO- oder MISO-fähiges Kommunikationssystem (8) handelt und dass das zu überprüfende drahtlose Kommunikationssystem (8) dem WLAN-Standard und/oder dem WiMAX-Standard und/oder dem LTE-Standard entspricht.

## Claims

1. Measuring device (1) for analysing signals with a plurality of data streams (7₁ to 7ₙ; 9₁ to 9ₙ) of a wireless communications system (2; 8) with at least two transmitting units, exhibiting a receiving unit (4) and a processing unit (3),
wherein a switching unit (6) firstly connects the at least two transmitting units of a known wireless communications system (2) individually one after the other with the measuring device (1),
wherein then a combiner (10) connects the at least two transmitting units of a wireless communications system (8) to be checked with one another and with the measuring device (1),
wherein the data stream (7₁ to 7ₙ; 9₁ to 9ₙ) is a periodic data stream (7₁ to 7ₙ; 9₁ to 9ₙ),
wherein the data stream (7₁ to 7ₙ; 9₁ to 9ₙ) contains a preamble,
wherein the preambles of all the data streams (7₁ to 7ₙ; 9₁ to 9ₙ) are orthogonal to one another and
wherein the data stream (7₁ to 7ₙ) of the known wireless communications system (2) is the same as the data stream 9₁ to 9ₙ) of the wireless communications system (8) to be checked.

2. Measuring device according to claim 1,
**characterised in that**
one data stream (7₁ to 7ₙ; 9₁ to 9ₙ) for each transmitting unit of the known wireless communications system (2) and of the wireless communication system (8) to be checked can be received by the receiving unit (4) and processed in the processing unit (3), and
**in that** the at least two transmitting units of the known wireless communications system (2) can be connected one after the other with an input connection of the measuring device (1) through the switching unit (6).

3. Measuring device according to claim 1 or 2,
**characterised in that**
the at least two transmitting units of the wireless communications system (8) to be checked can be connected with one another through a combiner (10) and with an input connection of the measuring device (1) through an output of the combiner (10).

4. Measuring device according to one of the preceding claims,
**characterised in that**
transmitting symbols can be determined from the received data stream (7₁ to 7ₙ) of the known wireless communications system (2) in the processing unit (3).

5. Measuring device according to one of the preceding claims,
**characterised in that**
a data stream (9₁ to 9ₙ) is transmitted by means of each transmitting unit of the wireless communications system (8) to be checked and **in that** the data streams (9₁ to 9ₙ) are added together and can be fed to the measuring device (1) at an input connection.

6. Measuring device according to claims 4 and 5,
**characterised in that**
the composite error vector magnitude (EVM) of the wireless communications system (8) to be checked can be determined by the processing unit (3) with the determined transmitting signals and/or data streams (7₁ to 7ₙ) of the known wireless communications system (2) and the data streams (9₁ to 9ₙ) of the wireless communications system (8) to be checked.

7. Measuring device according to one of the preceding claims,
**characterised in that**
the measuring device (1) measures the composite error vector magnitude (EVM) for the wireless communications system (8) to be checked, wherein the wireless communications system (8) to be checked is an MIMO or MISO-enabled communications system (8) and **in that** the wireless communications system (8) to be checked corresponds to the WLAN standard and/or the WIMAX standard and/or the LTE standard.

8. Method for analysing signals with a plurality of data streams (7₁ to 7ₙ; 9₁ to 9ₙ) of a wireless communications system (2; 8) with a measuring device (1), wherein the wireless communications system (2; 8) exhibits at least two transmitting units with the following method steps:
a) connection (S₁) of a single transmitting unit of a known wireless communications system (2) with an input connection of the measuring device (1);
b) transmission (S₂) of a data stream (7₁ to 7ₙ) with this single transmitting unit of the known wireless communications system (2) to the measuring device (1);
c) recording (S₃) of the data stream (7₁ to 7ₙ) of the known wireless communications system (2) with the measuring device (1);
d) repetition (S₄) of the method steps a) to c) for all the transmitting units of the known wireless communications system (2) one after another;
e) connection (S₅) of all the transmitting units of a wireless communications system (8) to be checked with one another and with the input connection of the measuring device (1);
f) recording (S₆) and analysing of all the data streams (9₁ to 9ₙ) of the wireless communications system (8) to be checked with the measuring device (1),
wherein each data stream (7₁ to 7ₙ; 9₁ to 9ₙ) is a periodic data stream (7₁ to 7ₙ; 9₁ to 9ₙ),
wherein the data stream (7₁ to 7ₙ; 9₁ to 9ₙ) contains a preamble,
wherein the preambles of all the data streams (7₁ to 7ₙ; 9₁ to 9ₙ) are orthogonal to one another and
wherein the data stream (7₁ to 7ₙ) of the known wireless communications system (2) is the same as the data stream (9₁ to 9ₙ) of the wireless communications system (8) to be checked.

9. Method according to claim 8,
**characterised by**
the following method step:
g) detection (S₇) of individual transmitting symbols inside each data stream (7₁ to 7ₙ) of the known wireless communications system (2) by the measuring device (1).

10. Method according to claim 8 or 9,
**characterised by**
the following method step:
h) storage (S₈) of the recorded data stream (7₁ to 7n; 9₁ to 9ₙ) or of the transmitting symbols from the known wireless communications system (2) and/or from the wireless communications system (8) to be checked in a storage unit (5).

11. Method according to one of claims 8 to 10,
**characterised by**
the following method step:
i) calculation (S₉) of the transmission function of the transmission channel of the known wireless communications system (2) and/or of the wireless communications system (8) to be checked.

12. Method according to one of claims 8 to 11,
**characterised by**
the following method step:
j) calculation (S₁₀) of the composite error vector magnitude (EVM) of the wireless communications system (8) to be checked.

13. Method according to one of claims 8 to 12,
**characterised in that**
the method steps a) to e) are repeated for every configuration of the known wireless communications system (2) to be checked,
wherein a configuration describes for example a number of the transmitted data streams (7₁ to 7ₙ; 9₁ to 9ₙ) and/or the used modulation and/or coding schemes and/or a length of the data streams (7₁ to 7ₙ; 9₁ to 9ₙ) and/or a periodicity of the data streams (7₁ to 7ₙ; 9₁ to 9ₙ).

14. Method according to one of claims 8 to 13,
**characterised in that**
preferably one period of the data stream (7₁ to 7ₙ; 9₁ to 9ₙ) is recorded.

15. Method according to one of claims 8 to 14,
**characterised in that**
the measuring device (1) measures the composite error vector magnitude (EVM) for the wireless communications system (8) to be checked, wherein the wireless communications system (8) to be checked is an MIMO or MISO-enabled communications system (8) and **in that** the wireless communications system (8) to be checked corresponds to the WLAN standard and/or the WIMAX standard and/or the LTE standard.

## Revendications

1. Dispositif de mesure (1) en vue de l'analyse de signaux comportant plusieurs flux de données (7₁ à 7ₙ ; 9₁ à 9ₙ) d'un système de communication sans fil (2 ; 8) comportant au moins deux unités d'émission, présentant une unité de réception (4) et une unité de traitement (3),
dans lequel une unité de commutation (6) relie les au moins deux unités d'émission d'un système de communication sans fil connu (2) tout d'abord l'une après l'autre individuellement au dispositif de mesure (1),
dans lequel ensuite un combineur (10) relie les au moins deux unités d'émission d'un système de communication sans fil à vérifier (8) l'un à l'autre et au dispositif de mesure (1),
dans lequel, en ce qui concerne le flux de données (7₁ à 7ₙ ; 9₁ à 9ₙ), il s'agit d'un flux de données périodique (7₁ à 7ₙ ; 9₁ à 9ₙ),
dans lequel le flux de données (7₁ à 7ₙ ; 9₁ à 9ₙ) comporte un préambule,
dans lequel les préambules de tous les flux de données (7₁ à 7ₙ ; 9₁ à 9ₙ) sont orthogonaux l'un par rapport à l'autre et
dans lequel le flux de données (7₁ à 7ₙ) du système de communication sans fil connu (2) est le même que le flux de données (9₁ à 9ₙ) du système de communication sans fil à vérifier (8).

2. Dispositif de mesure selon la revendication 1, **caractérisé en ce que**
un flux de données (7₁ à 7ₙ ; 9₁ à 9ₙ) pour chaque unité d'émission du système de communication sans fil connu et de celui sans fil à vérifier (2 ; 8) peut être reçu par l'unité de réception (4) et être traité par l'unité de traitement (3),
et **en ce que** les au moins deux unités d'émission du système de communication sans fil connu (2) peuvent être reliées par l'intermédiaire de l'unité de commutation (6) l'une après l'autre à une borne d'entrée du dispositif de mesure (1).

3. Dispositif de mesure selon la revendication 1 ou 2, **caractérisé en ce que**
les au moins deux unités d'émission du système de communication sans fil à vérifier (8) peuvent être reliées l'une à l'autre par l'intermédiaire d'un combineur (10) et par l'intermédiaire d'une sortie du combineur (10) à une borne d'entrée du dispositif de mesure (1).

4. Dispositif de mesure selon l'une des revendications précédentes, **caractérisé en ce que**
les symboles d'émission du flux de données reçu (7₁ à 7ₙ) du système de communication sans fil connu (2) sont détectés dans l'unité de traitement (3).

5. Dispositif de mesure selon l'une des revendications précédentes, **caractérisé en ce que**
un flux de données (9₁ à 9ₙ) est transmis par l'intermédiaire de chaque unité d'émission du système de communication sans fil à vérifier (8), et **en ce que** les flux de données (9₁ à 9ₙ) sont ajoutés et sont délivrés au dispositif de mesure (1) à une borne d'entrée.

6. Dispositif de mesure selon les revendications 4 et 5, **caractérisé en ce que**
l'amplitude du vecteur d'erreur composite "Composite EVM" du système de communication sans fil à vérifier (8) est détectée par l'unité de traitement (3) grâce aux symboles d'émission et/ou aux flux de données (7₁ à 7ₙ) devant être déterminés du système de communication sans fil connu (2) et aux flux de données (9₁ à 9ₙ) du système de communication sans fil à vérifier (8).

7. Dispositif de mesure selon l'une des revendications précédentes, **caractérisé en ce que**
le dispositif de mesure (1) mesure l'amplitude du vecteur d'erreur composite "Composite EVM" pour le système de communication sans fil à vérifier (8), dans lequel, en ce qui concerne le système de communication sans fil à vérifier (8), il s'agit d'un système de communication à MIMO ou à MISO (8) et **en ce que** le système de communication sans fil à vérifier (8) correspond au standard WLAN et/ou au standard WiMAX et/ou au standard LTE.

8. Procédé en vue de l'analyse de signaux comportant plusieurs flux de données (7₁ à 7ₙ ; 9₁ à 9ₙ) d'un système de communication sans fil (2 ; 8) comportant un dispositif de mesure (1), dans lequel le système de communication sans fil (2 ; 8) présente au moins deux unités d'émission comportant les étapes de procédé suivantes :
a) relier (S₁) une seule unité d'émission d'un système de communication sans fil connu (2) à une borne d'entrée du dispositif de mesure (1) ;
b) envoyer (S₂) un flux de données (7₁ à 7ₙ) avec cette seule unité d'émission du système de communication sans fil connu (2) au dispositif de mesure (1) ;
c) enregistrer (S₃) le flux de données (7₁ à 7ₙ) du système de communication sans fil connu (2) grâce au dispositif de mesure (1) ;
d) répéter (S₄) les étapes de procédé a) à c) pour toutes les unités d'émission du système de communication sans fil connu (2) les unes après les autres ;
e) relier (S₅) toutes les unités d'émission d'un système de communication sans fil à vérifier (8) les unes aux autres et à la borne d'entrée du dispositif de mesure (1) ;
f) enregistrer (S₆) et analyser tous les flux de données (9₁ à 9ₙ) du système de communication sans fil à vérifier (8) grâce au dispositif de mesure (1),
dans lequel, en ce qui concerne chaque flux de données (7₁ à 7ₙ ; 9₁ à 9ₙ), il s'agit d'un flux de données périodique (7₁ à 7ₙ ; 9₁ à 9ₙ),
dans lequel le flux de données (7₁ à 7ₙ ; 9₁ à 9ₙ) comporte un préambule,
dans lequel les préambules de tous les flux de données (7₁ à 7ₙ ; 9₁ à 9ₙ) sont orthogonaux les uns par rapport aux autres et
dans lequel le flux de données (7₁ à 7ₙ) du système de communication sans fil connu (2) est le même que le flux de données (9₁ à 9ₙ) du système de communication sans fil à vérifier (8).

9. Procédé selon la revendication 8, **caractérisé par**
l'étape de procédé suivante :
g) détecter (S₇) différents symboles d'émission à l'intérieur de chaque flux de données (7₁ à 7ₙ) du système de communication sans fil connu (2) grâce au dispositif de mesure (1).

10. Procédé selon la revendication 8 ou 9, **caractérisé par**
l'étape de procédé suivante :
h) mémoriser (S₈) le flux de données enregistré (7₁ à 7ₙ ; 9₁ à 9ₙ) ou le symbole d'émission grâce au système de communication sans fil connu (2) et/ou grâce au système de communication sans fil à vérifier (8) dans une unité de stockage (5).

11. Procédé selon l'une des revendications 8 à 10, **caractérisé par**
l'étape de procédé suivante :
i) calculer (S₉) la fonction de transmission du canal de transmission du système de communication sans fil connu (2) et/ou du système de communication sans fil à vérifier (8).

12. Procédé selon l'une des revendications 8 à 11, **caractérisé par**
l'étape de procédé suivante :
j) calculer (S₁₀) l'amplitude du vecteur d'erreur composite "Composite EVM" du système de communication sans fil à vérifier (8).

13. Procédé selon l'une des revendications 8 à 12, **caractérisé en ce que**
les étapes de procédé a) à e) sont répétées pour chaque configuration à vérifier du système de communication sans fil connu (2),
dans lequel une configuration décrit par exemple une pluralité de flux envoyés (7₁ à 7ₙ ; 9₁ à 9ₙ) et/ou les schémas de modulation et/ou de codage utilisés et/ou une longueur des flux de données (7₁ à 7ₙ ; 9₁ à 9ₙ) et/ou une périodicité des flux de données (7₁ à 7ₙ ; 9₁ à 9ₙ).

14. Procédé selon l'une des revendications 8 à 13, **caractérisé en ce que**
de préférence une période du flux de données (7₁ à 7ₙ ; 9₁ à 9ₙ) est enregistrée.

15. Procédé selon l'une des revendications 8 à 14, **caractérisé en ce que**
le dispositif de mesure (1) mesure l'amplitude de vecteur d'erreur composite "Composite EVM" pour le système de communication sans fil à vérifier (8), dans lequel, concernant le système de communication sans fil à vérifier (8), il s'agit d'un système de communication à MIMO ou à MISO et **en ce que** le système de communication sans fil à vérifier (8) correspond au standard WLAN et/ou au standard WiMAX et/ou au standard LTE.
